# EUROPEAN PATENT APPLICATION

(11) **EP 1 783 704 A1**
(43) Date of publication of application: **09.05.2007**
(21) Application number: 05762034.6
(22) Date of filing: 22.07.2005
(51) Int. Cl.: G07F 9/02

(54) **AUTOMATIC VENDER**

(30) Priority: 26.08.2004 JP 2004246962
(71) Applicant: Sanden Corporation, Isesaki-shi, Gunma 372-8502 (JP)
(72) Inventor: SATO, Masaaki, SANDEN CORPORATION, Isesaki-shi Gunma 3728502 (JP)
(74) Representative: Haley, Stephen
(86) International application number: PCT/JP2005/013482
(87) International publication number: WO 2006/022102

(57) **Abstract**

A vending machine which can match the personal preference of the prospective purchaser, enhance his or her motivation to purchase and display information with a high advertising effect is provided.

A display drive unit 31 drives a display 4 in accordance with image data, character data and control signals from a second control unit 30 to output images, and an audio output unit 32 performs audio outputting by driving loudspeakers 5 in accordance with audio data and control signals from the second control unit 30. An IC chip reader 10 reads IC chip information stored in an IC chip A and delivers it to the second control unit 30. A modem 33 receives data from outside by utilizing a communication line 35, a communication antenna 36 and so forth in accordance with control signals from the second control unit 30, and delivers them to the second control unit 30. A storage device 34 stores a plurality of sets of component data, and also stores data received by the modem 33 in accordance with control signals from the second control unit 30 or delivers to the second control unit 30 data it stores.

## Description

### Technical field

The present invention relates to a vending machine which displays prescribed information including information on articles that can be sold.

### Background art

Conventional such vending machines include one which sets and/or registers data to be displayed on a display device provided on a vending machine from any outside personal computer or the like by utilizing a web server, and causes desired data to be displayed (see Patent Document 1 for instance).

Also known is a vending machine having an advertisement outputting function enabled to output advertising information according to the attributes of geographical area, product item and so forth (see Patent Document 2 for instance).
[Patent Document 1]: Japanese Patent Publication No. 2000-149118
[Patent Document 2]: Japanese Patent Publication No. 2003-132264

### Disclosure of the invention

### Problems to be solved by the invention

However, conventional vending machines, since the contents of their displays are determined on the basis of a generalized view of marketer and advertiser intended to address mary purchasers, involve the risk that the displays cannot necessarily enhance the motivation of each individual prospective purchaser and exert a high advertising effect.

An object of the present invention, attempted in view of the problem noted above, is to provide a vending machine capable to display information that will enhance the motivation of each individual prospective purchaser and exert a high advertising effect by adapting to his or her preference.

### Means for solving the problems

In order to achieve the object stated above, the invention proposes a vending machine which displays with display means prescribed information including information on articles that can be sold, comprising: storage means for storing a plurality of sets of component data which constitute elements of displaying the prescribed information; reading means for reading from an external IC chip IC chip information containing display configuration data representing a prescribed combination of saidpluralityof sets of component data; and data creating means for creating data combining said plurality of sets of component data in accordance with said display configuration data, wherein said display means performs displaying in accordance with data created by said data creating means.

In the vending machine of the above-described configuration, IC chip information containing display configuration data representing a prescribed combination of the plurality of sets of component data which constitute elements of displaying prescribed information are read from an external IC chip, data combining the plurality of sets of component data in accordance with the display configuration data are created, and prescribed information including information on articles that can be sold is displayed. Therefore, the display of information on the articles that can be sold can be altered for each set of display configuration data.

Also, the invention proposes the vending machine of the above-described configuration further comprising communication means connected via a network to a server having second storage means for storing said plurality of sets of component data, wherein said data creating means has means for creating data in which said plurality of sets of component data received by said communication means are combined in accordance with said display configuration data.

In the vending machine of the above-described configuration, connection is accomplished via a network to a server having second storage means for storing the plurality of sets of component data, and data in which the plurality of sets of component data received are combined are created in accordance with the display configuration data. Therefore, information on the articles that can be sold can be displayed on the basis of the plurality of sets of component data stored by the server.

Also, the invention proposes the vending machine of the above-described configuration further comprising writing means for writing into said storage means said plurality of sets of component data received by said communication means at prescribed intervals, wherein said data creating means has means for creating data in which said plurality of sets of component data written into said storage means are combined in accordance with said display configuration data.

In the vending machine of the above-described configuration, the plurality of sets of component data received at prescribed intervals are stored, and data in which the plurality of sets of component data stored are combined in accordance with the display configuration data are created. Therefore, component data stored by the storage means are altered at prescribed intervals to component data stored by the server, and information on the articles that can be sold can be displayed on the basis of the altered component data.

Also, the invention proposes the vending machine of the above-described configuration wherein: said display configuration data are created by a terminal connected to said server via a network by combining said plurality of sets of component data stored by said second storage means and written by IC chip writing means of said terminal into the IC chip, and said reading means has means for reading IC chip information containing the display configuration data from the IC chip outside.

In the vending machine of the above-described configuration, the plurality of sets of component data stored by the second storage means are combined by a terminal connected to the server via a network to create the display configuration data, and IC chip information containing the display configuration data written by the IC chip writing means of the terminal into the IC chip is read. Therefore, the display configuration data contained in the IC chip information can be altered, and the display of information on the articles that can be sold can be altered for each set of altered display configuration data.

Also, the invention proposes the vending machine of the above-described configuration wherein: the IC chip information read by said reading means contains other data than display configuration data, and said data creating means has means for creating data in which said plurality of sets of component data are combined in accordance with the IC chip information.

In the vending machine of the above-described configuration, data in which the plurality of sets of component data are combined are created on the basis of IC chip information containing other data than display configuration data. Therefore, the display of information on the articles that can be sold can be altered for each set of IC chip information.

Also, the invention proposes the vending machine of the above-described configuration wherein said reading means is provided with at least one of a non-contact type IC chip reader and a contact type IC chip reader.

In the vending machine of the above-described configuration, there is provided at least one of a non-contact type IC chip reader and a contact type IC chip reader. Therefore, IC chip information of at least one of the non-contact type IC chip and the contact type IC chip can be read.

Also, the invention proposes the vending machine of the above-described configuration wherein said plurality of sets of component data contain at least anyone of still pictures, moving pictures and characters.

In the vending machine of the above-described configuration, the plurality of sets of component data contain at least any one of still pictures, moving pictures and characters. Therefore, information on the articles that can be sold can be displayed on the basis of component data.

Also, the invention proposes the vending machine of the above-described configuration wherein said plurality of sets of component data contain audio, and audio output means for outputting audio in accordance with data created by said data creating means is provided.

In the vending machine of the above-described configuration, the plurality of sets of component data contain audio, and audio is outputted in accordance with data created. Therefore, audio regarding the articles that can be sold can be outputted on the basis of component data.

Further in order to achieve the object stated above, the invention proposes a vending machine which displays with display means prescribed information including information on articles that can be sold, comprising: storage means for storing a plurality of sets of component data which constitute elements of displaying said prescribed information; reading means for reading from an external IC chip IC chip information containing IC chip identifying information which is unique to each individual IC chip; communication means connected via a network to a server having second storage means for storing display configuration data representing a prescribed combination of said plurality of sets of component data for each set of IC chip identifying data; and data creating means for creating data combining said plurality of sets of component data in accordance with said display configuration data received by the communication means, wherein said display means performs displaying in accordance with data created by said data creating means,

In the vending machine of the above-described configuration, IC chip information containing IC chip identifying information which is unique to each individual IC chip is read from an external IC chip, and connection is accomplished via a network to a server having second storage means for storing display configuration data representing a prescribed combination of the plurality of sets of component data which constitute elements of displaying the prescribed information for each set of IC chip identifying data. Further, data combining the plurality of sets of component data are created in accordance with the display configuration data received, and prescribed information including information on the articles that can be sold is displayed in accordance with data created. Therefore, the display of information on the articles that can be sold can be altered for each set of display configuration data.

Also, the invention proposes the vending machine of the above-described configuration further comprising writing means for writing into said storage means said display configuration data received by said communication means at prescribed intervals, wherein said data creating means has means for creating data in which said plurality of sets of component data written into said storage means are combined in accordance with said display configuration data.

In the vending machine of the above-described configuration, the display configuration data received at prescribed intervals are stored, and data in which the plurality of sets of component data are combined are created in accordance with the display configuration data stored. Therefore, alteration can be made to display configuration data stored by the server at prescribed intervals, and the display of information on the articles that can be sold can be altered for each set of altered display configuration data.

Also, the invention proposes the vending machine of the above-described configuration wherein: said second storage means has means for storing said plurality of sets of component data; and said data creating means has means for creating data in which said plurality of sets of component data received by said communication means are combined in accordance with said display configuration data.

In the vending machine of the above-described configuration, data in which the plurality of sets of component data received are combined are created in accordance with the display configuration data. Therefore, information on the articles that can be sold can be displayed on the basis of the plurality of sets of component data stored by the server.

Also, the invention proposes the vending machine of the above-described configuration further comprising second writing means for writing into said storage means said plurality of sets of component data received by said communication means at prescribed intervals, wherein said data creating means has means for creating data in which said plurality of sets of component data written into said storage means are combined in accordance with said display configuration data.

In the vending machine of the above-described configuration, the plurality of sets of component data received at prescribed intervals are stored, and data in which the plurality of sets of component data stored in accordance with the display configuration data are combined are created. Therefore, component data stored by the storage means are altered at prescribed intervals to component data stored by the server, and information on the articles that can be sold can be displayed on the basis of the altered component data.

Also, the invention proposes the vending machine of the above-described configuration wherein: the data stored in said second storage means are said display configuration data created by a terminal connected to said server via a network and written into said second storage means together with said IC chip identifying data read by IC chip reading means of said terminal; and said data creating means creates data in which said plurality of sets of component data are combined in accordance with the display configuration data received by said communication means.

In the vending machine of the above-described configuration, the display configuration data created by a terminal connected to the server via a network, and display configuration data written into the second storage means together with the IC chip identifying data read by IC chip reading means of the terminal are received, and the plurality of sets of component data combined in accordance with the display configuration data are created. Therefore, the display configuration data stored by the server can be altered.

Also, the invention proposes the vending machine of the above-described configuration wherein: the IC chip information read by said reading means contains other data than display configuration data, and said data creating means has means for creating data in which said plurality of sets of component data are combined in accordance with the IC chip information.

In the vending machine of the above-described configuration, data in which the plurality of sets of component data are combined are created on the basis of IC chip information containing other data than display configuration data. Therefore, the display of information on the articles that can be sold can be altered for each set of IC chip information.

Also, the invention proposes the vending machine of the above-described configuration wherein said reading means is provided with at least one of a non-contact type IC chip reader and a contact type IC chip reader.

In the vending machine of the above-described configuration, there is provided at least one of a non-contact type IC chip reader and a contact type IC chip reader. Therefore, IC chip information of at least one of the non-contact type IC chip and the contact type IC chip can be read.

Also, the invention proposes the vending machine of the above-described configuration wherein said plurality of sets of component data contain at least any one of still pictures, moving pictures and characters.

In the vending machine of the above-described configuration, the plurality of sets of component data contain at least any one of still pictures, moving pictures and characters. Therefore, information on the articles that can be sold can be displayed on the basis of component data.

Also, the invention proposes the vending machine of the above-described configuration wherein: said plurality of sets of component data contain audio, and audio output means for outputting audio in accordance with data created by said data creating means is provided.

In the vending machine of the above-described configuration, the plurality of sets of component data contain audio, and audio is outputted in accordance with data created. Therefore, audio regarding the articles that can be sold can be outputted.

### Advantages of the invention

The vending machine according to the invention makes it possible to alter information on the articles that can be sold by combining a plurality of sets of component data in accordance with display configuration data contained in IC chip information of an external IC chip, and the motivation of each individual prospective purchaser owning the IC chip can be enhanced and exert a high advertising effect by adapting to his or her preference.

It is also possible to display timely information based on the component data stored by the server by receiving via a network a plurality of sets of component data stored by the server and writing display configuration data into the IC chip information, and at the same time to alter the display of information on the articles that can be sold for each set of altered display configuration data, thereby enabling the display to reflect differences in preference from purchaser to purchaser in accordance with the altered display configuration data.

It is further possible to alter the display of information on the articles that can be sold for each set of IC chip information by combining a plurality of sets of component data in accordance with IC chip information, and thereby to have the display reflect each purchaser's unconscious preference.

The aforementioned and other objects, features and benefits of the present invention will become more apparent from the following description and accompanying drawings.

### Brief description of the drawings

Figure 1 shows a front view of a vending machine in a first embodiment of the invention;
Figure 2 is a block diagram showing the control system configuration of the vending machine shown in Figure 1;
Figure 3 is a functional block diagram showing how data are transmitted and received via a network in the first embodiment of the invention;
Figure 4 is a view for explaining display configuration data in the first embodiment of the invention;
Figure 5 is a flow chart showing the flow of article displaying in the vending machine shown in Figure 1;
Figure 6 is a functional block diagram showing how data are transmitted and received via a network in a second embodiment of the invention; and
Figure 7 is a flow chart showing the flow of article displaying in the vending machine in the second embodiment of the invention.

### Description of symbols

1 ... Vending machine, 2 ... external door, 3 ... dressed panel, 3a ... advertising section, 3b ... window opening, 4 ... display, 5 ... loudspeakers, 6 ... lock operating lever, 7 ... coin inlet, 8 ... return lever, 9 ... bank note inlet, 10 ... IC chip reader, 11 ... bank note inlet, 12 ... article outlet, 13 ... flap door, 20 ... first control unit, 21 ... coin handler, 22 ... bank note discriminator, 23 ... delivery drive unit, 24 ... compressor drive unit, 25 ... heater drive unit, 26 ... temperature regulation setter, 27 ... vending mechanism, 28 ... compressor, 29 ... heaters, 30 ... second control unit, 31 ... display drive unit, 32 ... audio output unit, 33 ... modem, 34 ... storage device, 35 ... communication line, 36 ... communication antenna, A ... IC chip, N ... network, S ... server, T ... terminal, Ta ... IC chip writer, Tb ... IC chip reader

### Best modes for carrying out the invention

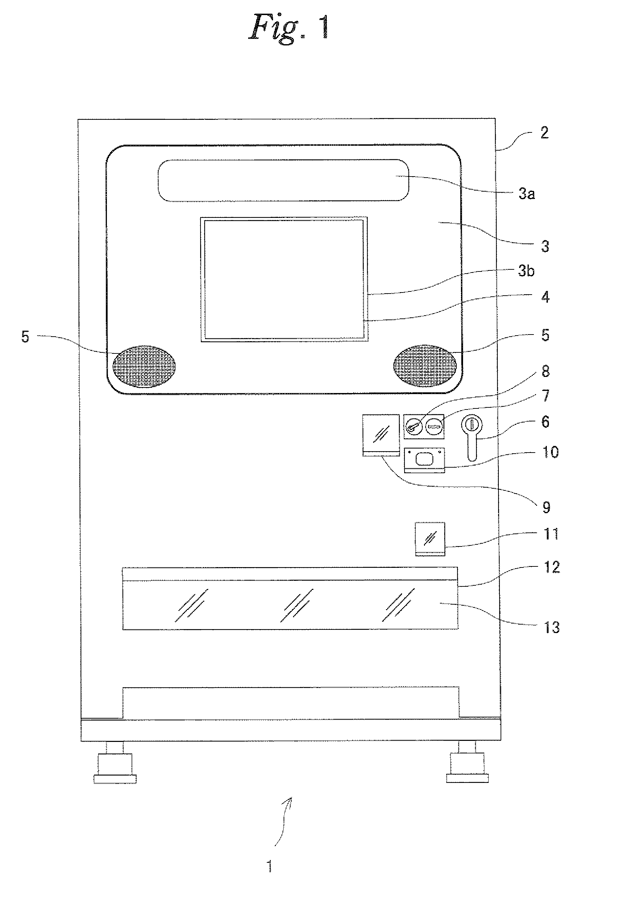

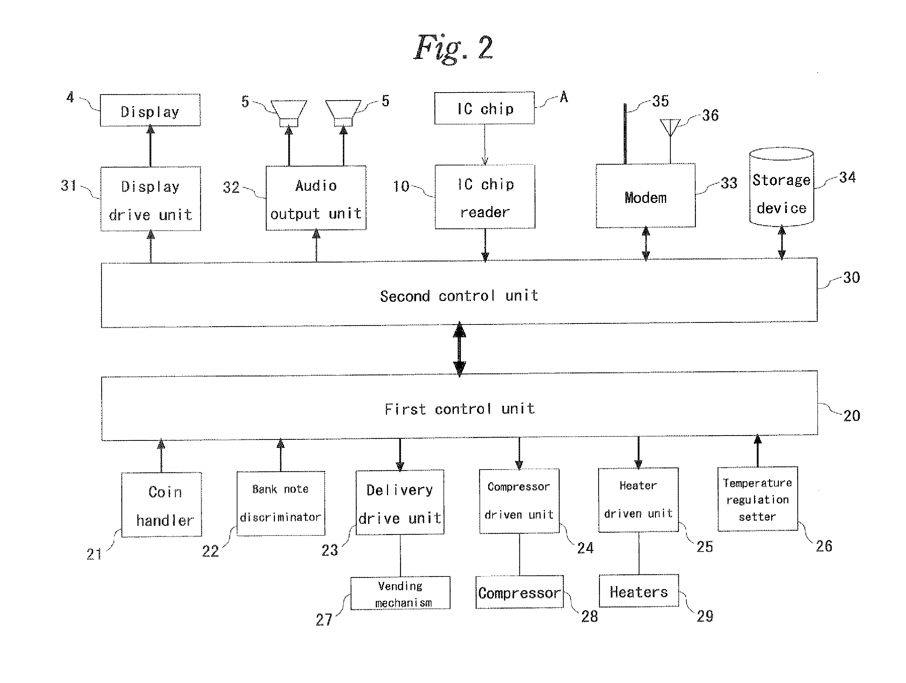

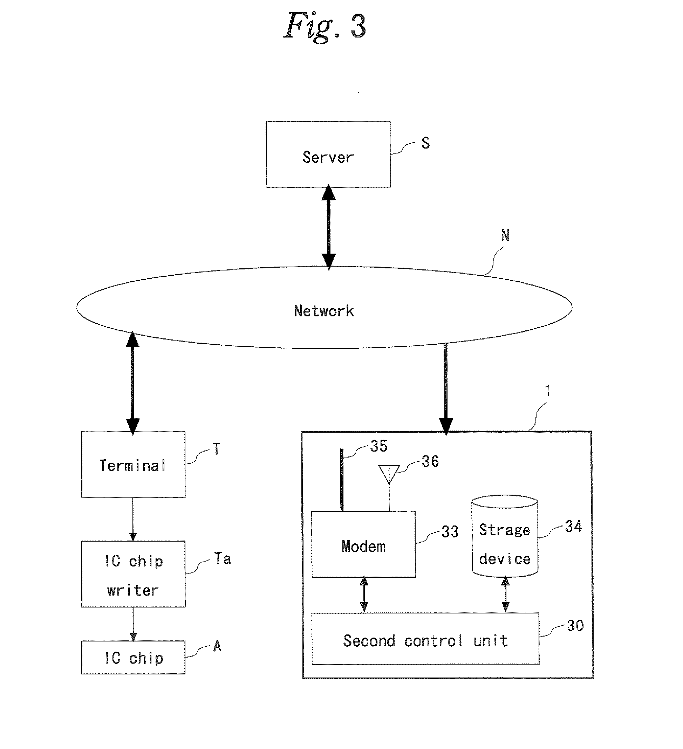

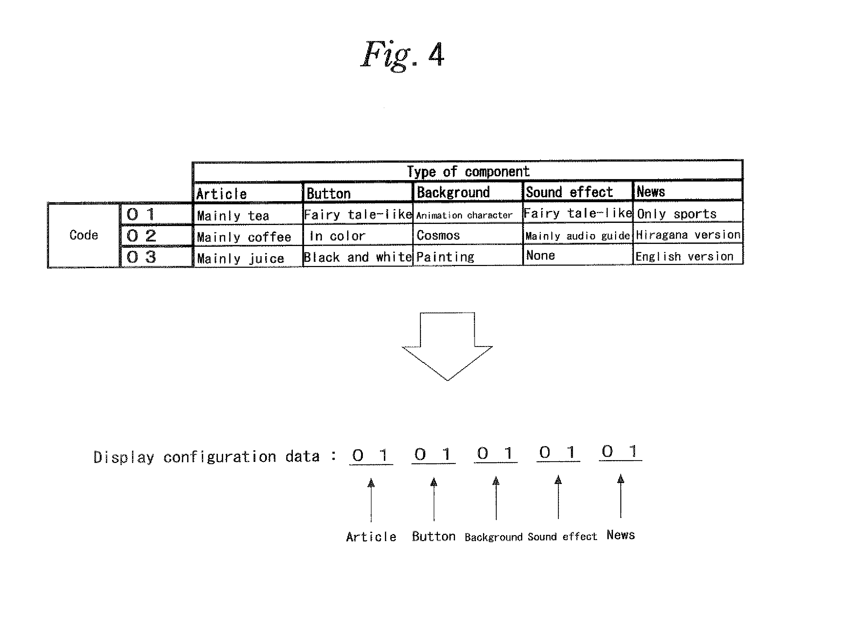

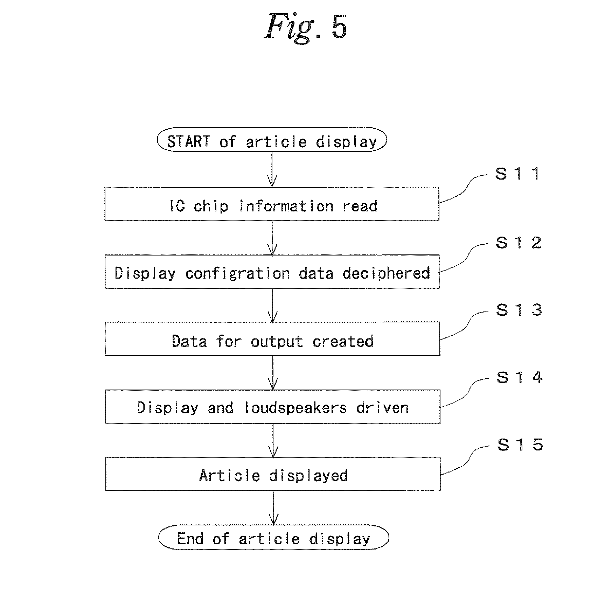

Figure 1 through Figure 5 show one embodiment of the present invention: Figure 1 showing a front view of a vending machine in a first embodiment of the invention; Figure 2, a block diagram showing the control system configuration of the vending machine shown in Figure 1; Figure 3, a functional block diagram showing how data are transmitted and received via a network in the first embodiment of the invention; Figure 4, a view for explaining display configuration data in the first embodiment of the invention; and Figure 5, a flow chart showing the flow of article displaying in the vending machine shown in Figure 1.

First, the structure of a vending machine 1 will be described with reference to Figure 1.

An external door 2 is disposed on the front face of the vending machine 1 to be openable, and a dressed panel 3 is provided on the upper part of the surface of this external door 2. This dressed panel 3 has an advertising section 3a for displaying in characters the name of a product, the name of a product manufacturer or the like, a window opening 3b for exposing the display screen of a display 4 and left and right loudspeakers 5.

The display 4 is intended for displaying still images, moving images, characters and so forth, and its display screen is so arranged within the dressed panel 3 as to be exposed through the window opening 3b. The display 4 is, for instance, a liquid crystal display, which may be any known type that allows similar displaying, such as a CRT (cathode ray tube) display, a PDP (plasma display panel) or an organic EL (electro-luminescence) display.

The loudspeakers 5, intended for outputting audio and the like, are arranged on the two sides of the display 4. Though it is preferable for two or more of the loudspeakers 5 to be provided to achieve a three-dimensional acoustic effect by a stereophonic system or otherwise, only one would also be acceptable.

Further, a lock operating lever 6, a coin inlet 7, a return lever 8, a bank note inlet 9 and an IC chip reader 10 are disposed at the middle level of the external door 2.

The lock operating lever 6, intended for operating a lock mechanism (not shown) disposed within the external door 2, is made operable with a dedicated key.

The IC chip reader 10 is intended for reading information stored in an external IC chip A, for instance a non-contact IC card or a non-contact IC chip-mounting type mobile telephone. The IC chip reader 10 is not limited to a non-contact type one, but may also be a contact type or a combined non-contact and contact type one, and it may as well be an IC chip reader/writer.

A coin return outlet 11 and an article outlet 12 are arranged in the lower part of the external door, and the article outlet 12 is provided with a manually openable flap door 13.

Next, the control system configuration of the vending machine shown in Figure 1 will be described with reference to Figure 2. A first control unit 20 is mainly intended for controlling the temperature regulation and delivery of articles among other functions, and a second control unit 30 is mainly intended for controlling the outputs of the display 4 and the loudspeakers 5 and data communication with outside among other functions. Each of the first control unit 20 and the second control unit 30 consists of a computer provided with a CPU, RAM, ROM and so forth, and they can exchange with each other data required for control. The first control unit 20 and the second control unit 30 may obviously be configured of a single computer.

A coin handler 21, a bank note discriminator 22, a delivery drive unit 23, a compressor drive unit 24, a heater drive unit 25 and a temperature regulation setter 26 are connected to the first control unit 20.

The coin handler 21 and the bank note discriminator 22 are arranged within the external door 2: the coin handler 21 distinguishes true coins from fake ones, if any, inputted through the coin inlet 7 counts and stores them, and delivers to the first control unit 20 data on the sum of inputted coins. The bank note discriminator 22 distinguishes true notes from fake ones, if any, inputted through the bank note inlet 9 and stores them, and delivers to the first control unit 20 data on the sum of inputted notes.

The delivery drive unit 23, disposed on an article accommodating rack (not shown), is intended to control the operation of a vending mechanism 27 for dropping and delivering articles, or in more detail to control the operation of an actuator, such as a solenoid, used in the vending mechanism 27, and delivers the intended article by operating the prescribed vending mechanism 27 in accordance with a control signal from the first control unit 20.

The compressor drive unit 24, intended for control of the operation of a compressor 28 which constitutes a refrigerating machine, or in more detail for control of the operation of a motor for driving the compressor 28, and performs intended compressor driving in accordance with a control signal from the first control unit 20.

The heater drive unit 25, intended for control of power supply to a plurality of heaters 29 constituting the refrigerating machine, supplies power to the intended heater 27 in accordance with a control signal from the first control unit 20.

The temperature regulation setter 26, for selection of one out of a plurality of modes including cooling and heating, is provided with push-button switches for mode selection and so forth, and delivers data regarding the selected mode to the first control unit 20.

A display drive unit 31, an audio output unit 32, the IC chip reader 10, a modem 33 and a storage device 34 are connected to the second control unit 30, which has means of creating data to be delivered to the display drive unit 31 and the audio output unit 32 and means of writing into the storage device 34 data received via the modem 33.

The display drive unit 31, intended for controlling the output of the display 4 disposed on the external door 2, causes intended images to be displayed by driving the display 4 in accordance with image data, character data and control signals from the second control unit 30.

The audio output unit 32 performs intended audio outputting by driving the loudspeakers 5 in accordance with audio data and control signals from the second control unit 30.

The IC chip reader 10, intended for reading IC chip information stored in the IC chip A, delivers the IC chip information which has been read to the second control unit 30. To be compatible with an IC chip Amounted with an electronic money function, it is also conceivable to deliver data on sums of money and write data on sums of money into the IC chip instead of the coin handler 21 and the bank note discriminator 22 or in addition to the coin handler 21 and the bank note discriminator 22. In this case, the IC chip reader 10 serves as an IC chip reader/writer.

The modem 33, intended to perform data communication, wired or wireless, with an external server or the like by utilizing a communication line 35, a communication antenna 36 and so forth, receives data from outside in accordance with control signals from the second control unit 30, and delivers them to the second control unit 30. Only either of the communication line 35 or the communication antenna 36 would suffice.

The storage device 34, intended for storage of a plurality of sets of component data which constitute elements of displaying prescribed information including article information, such as article image data, background moving picture data, news character data and sound effect audio data, stores data received by the modem 33 or delivers to the second control unit 30 data it stores, both in accordance with control signals from the second control unit 30.

Next, data transmission and reception via the network in the first embodiment will be described with reference to Figure 3 and Figure 4.

A server S, having a large-capacity storage device (not shown), such as a hard disk, stores data on the vending machine 1 including a plurality of sets of component data, and replaces as appropriate the plurality of sets of component data with the latest ones.

The second control unit 30, which can be connected to the server S via a network N by the communication line 35 or the communication antenna 36 connected to the modem 33, receives the component data stored by the server at prescribed intervals, and writes them into the storage device 34. Component data are not necessarily received regularly from the server S and written into the storage device 34. Component data may be received from the server S as required and written into the storage device 34 or, instead of receiving from the server S, written into the storage device 34 from a medium such as a memory card or a CD-ROM when replenishing the stock of articles.

The IC chip information stored in the IC chip A includes display configuration data. The display configuration data represent a prescribed combination of a plurality of sets of component data, which may comprise, for instance, the plurality of sets of component data classified into a plurality of attributes, combined with a code specified for each class of attribute. Where a variety of types from which choice can be made, such as articles, buttons, backgrounds, sound effects and news, and codes for the respective types are specified as shown in Figure 4, display configuration data are created in such a way that the first two digits represent the code of article, the next two digits represent the code of button, the next two digits represent the code of backgrounds, the next two digits represent the code of sound effects and the next two digits represent the code of news. The display configuration data are not limited to cases in which a plurality of sets of component data are to be classified into a plurality of attributes, but may be a combination of component data, intrinsic codes being specified for component data themselves.

It is possible to achieve connection to the server S via the network N by using a terminal T shown in Figure 3 and to create display configuration data by combining a plurality of sets of component data stored in the server. The created display configuration data are written into the IC chip A by an IC chip writer Ta. Therefore, it is possible to alter display configuration data contained in the IC chip information. The number of the server S is not limited to one, but a plurality of units may be included in the configuration as appropriate according to the performance, functions, quantity of communication, storage capacity and other factors.

Next, the operation to display articles on the vending machine 1 shown in Figure 1 will be described with reference to Figure 5.

The second control unit 30 reads with the IC chip reader 10 IC chip information containing display configuration data stored in an external IC chip A (S11). It deciphers code by code the display configuration data it has read (S12), and creates data to be outputted from a plurality of sets of component data stored in the storage device 34 or a plurality of sets of component data received via the modem 33 and combining component data matching each deciphered code (S13).

The second control unit 30, according to the types of data contained in the data to be outputted, delivers image data on moving pictures, still pictures and the like and character data to the display drive unit 31 and audio data to the audio output unit 32, each together with control signals, display articles that can be sold by driving the display 4 and the loudspeakers 5 (S14), and displays prescribed information such as an advertisement of a sales campaign and a new product news (S15).

It is also conceivable to include in the IC chip information other data than display configuration data, such as the history of articles purchased, the history of stations of embarkation and disembarkation, the company issuing the card on which the IC chip is mounted and the number of points, and to take into account these data reflecting the purchaser's unconscious preference in combining a plurality of sets of component data.

In this way, the vending machine configured and operating as described above can read IC chip information in an external IC chip A and, by combining a plurality of sets of component data in accordance with display configuration data contained in the IC chip information, alter the display of information on the articles that can be sold for each set of display configuration data, is enabled to display information which would match the personal preference of the prospective purchaser owning the IC chip, enhance his or her motivation to purchase and exert a high advertising effect.

It is also possible to display timely information based on the latest component data stored by the server by receiving via the network N at prescribed intervals or as required a plurality of sets of component data stored by the server and altering the display configuration data contained in the IC chip information, and at the same time to alter the display of information on the articles that can be sold for each set of display configuration data, thereby enabling the display to reflect changes of each purchaser's preference.

It is further possible to combine a plurality of sets of component data in accordance with not only display configuration data but also other data than display configuration data contained in the IC chip information and alter the display of information on the articles that can be sold for each set of IC chip information thereby to have the display reflect each purchaser's unconscious preference.

Next, a second embodiment of the invention will be described.

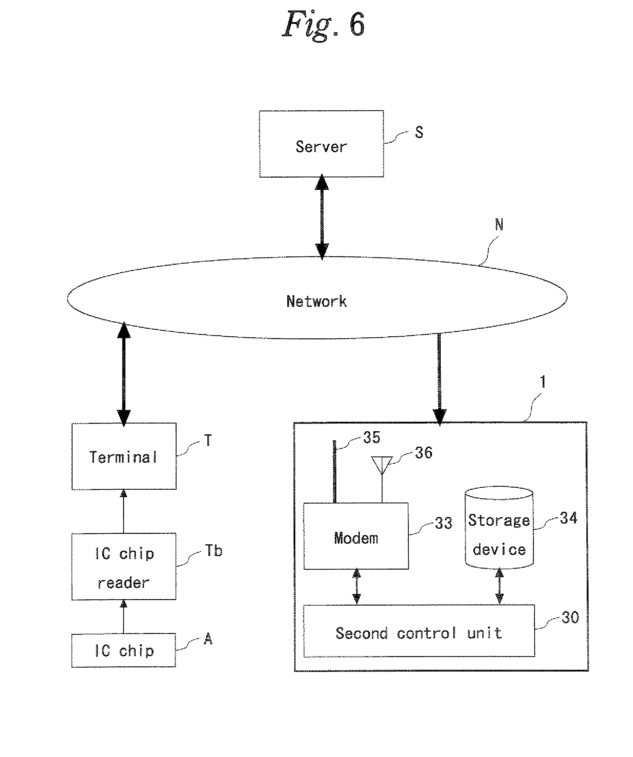

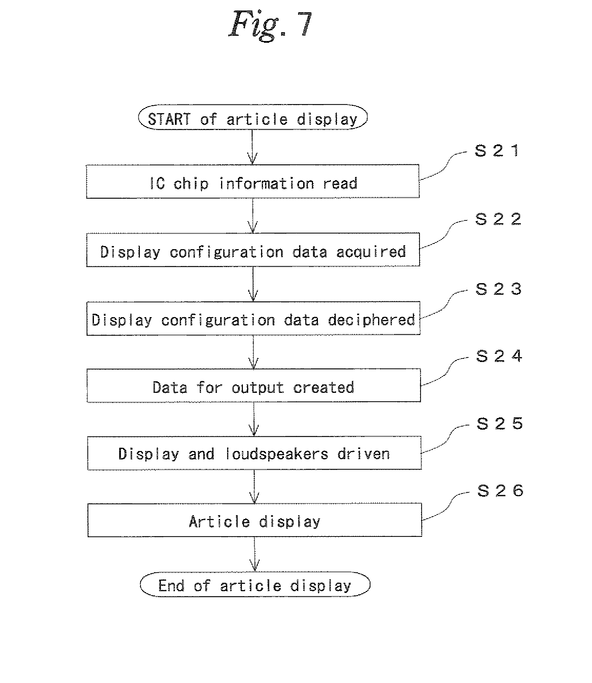

Figure 6 is a functional block diagram showing how data are transmitted and received via a network in the second embodiment of the invention, and Figure 7, a flow chart showing the flow of article displaying in the vending machine in the second embodiment of the invention. The same constituent parts as in Figure 1 will be designated by respectively the same reference signs, and their description will be dispensed with.

The difference between the second embodiment and the first embodiment consists in that, in the second embodiment, the IC chip information contains such IC chip identifying data as the IC chip ID or the IC chip number which is unique to each individual IC chip A, and that the server S stores display configuration data for each set of IC chip identifying data. It is also acceptable for the server S not to store a plurality of sets of component data but only for the storage device 34 to store a plurality of sets of component data.

The second control unit 30, as that in the first embodiment, is connected to the server S via the network N, display configuration data stored by the server are received at prescribed intervals and written into the storage device 34. The prescribed intervals of reception from the server may be either different from or the same as the prescribed intervals of the plurality of sets of component data. Also, it is the same as with the plurality of sets of component data in the first embodiment that display configuration data are not necessarily received regularly from the server S and written into the storage device 34.

The purchaser, using a terminal T shown in Figure 6, is connected to the server S via the network N and creates display configuration data, and the created display configuration data, together with IC chip identifying data read by an IC chip reader Tb which the terminal T has, are written into a large-capacity storage device (not shown) of the server S.

In the operation to display an article, as shown in Figure 7, the second control unit 30 reads with the IC chip reader 10 IC chip information containing IC chip identifying data stored in an external IC chip A (S21). It acquires, out of the display configuration data stored in the storage device 34 or the display configuration data received via the modem 33, display configuration data matching the IC chip identifying data which have been read (522). The subsequent step of operation S23 through S26 are respectively similar to S12 through S15 in the first embodiment.

In this way, the vending machine configured and operating as described above can provide the same effect as that in the first embodiment, even where the IC chip identifying information of the external IC chip A does not contain display configuration data, by reading IC chip information containing IC chip identifying data.

The configuration and operation according to the present invention are not limited to those in the above-described embodiments, but can be modified in various way within the range not deviating from the essentials of the invention.

### Industrial applicability

Since the display of information on the articles that can be sold is altered for each set of display configuration data by combining a plurality of sets of component data in accordance with display configuration data contained in the IC chip information of an external IC chip, it is made possible to apply to the purpose of displaying on a vending machine information which would match the personal preference of the prospective purchaser owning the IC chip, enhance his or her motivation to purchase and exert a high advertising effect.

## Claims

1. A vending machine which displays with display means prescribed information including information on articles that can be sold, comprising:
storage means for storing a plurality of sets of component data which constitute elements of displaying said prescribed information;
reading means for reading from an external IC chip IC chip information containing display configuration data representing a prescribed combination of said plurality of sets of component data; and
data creating means for creating data combining said plurality of sets of component data in accordance with said display configuration data, wherein said display means performs displaying in accordance with data created by said data creating means.

2. The vending machine according to Claim 1, further comprising communication means connected via a network to a server having second storage means for storing said plurality of sets of component data, wherein said data creating means has means for creating data in which said plurality of sets of component data received by said communication means are combined in accordance with said display configuration data.

3. The vending machine according to Claim 2, further comprising writing means for writing into said storage means said plurality of sets of component data received by said communication means at prescribed intervals, wherein said data creating means has means for creating data in which said plurality of sets of component data written into said storage means are combined in accordance with said display configuration data.

4. The vending machine according to Claim 2, wherein:
said display configuration data are created by a terminal connected to said server via a network by combining said plurality of sets of component data stored by said second storage means and written by IC chip writing means of said terminal into said IC chip, and
said reading means has means for reading IC chip information containing the display configuration data from the IC chip outside.

5. The vending machine according to Claim 1, wherein:
the IC chip information read by said reading means contains other data than display configuration data, and
said data creating means has means for creating data in which said plurality of sets of component data are combined in accordance with the IC chip information.

6. The vending machine according to Claim 1, wherein said reading means is provided with at least one of a non-contact type IC chip reader and a contact type IC chip reader.

7. The vending machine according to Claim 1, wherein said plurality of sets of component data contain at least any one of still pictures, moving pictures and characters.

8. The vending machine according to Claim 1, wherein:
said plurality of sets of component data contain audio, and
audio output means for outputting audio in accordance with data created by said data creating means is provided.

9. A vending machine which displays with display means prescribed information including information on articles that can be sold, comprising:
storage means for storing a plurality of sets of component data which constitute elements of displaying said prescribed information;
reading means for reading from an external IC chip IC chip information containing IC chip identifying information which is unique to each individual IC chip;
communication means connected via a network to a server having second storage means for storing display configuration data representing a prescribed combination of said plurality of sets of component data for each set of IC chip identifying data; and
data creating means for creating data combining said plurality of sets of component data in accordance with said display configuration data received by the communication means, wherein said display means performs displaying in accordance with data created by said data creating means.

10. The vending machine according to Claim 9, further comprising writing means for writing into said storage means said display configuration data received by said communication means at prescribed intervals, wherein said data creating means has means for creating data in which said plurality of sets of component data written into said storage means are combined in accordance with said display configuration data.

11. The vending machine according to Claim 9, wherein:
said second storage means has means for storing said plurality of sets of component data; and
said data creating means has means for creating data in which said plurality of sets of component data received by said communication means are combined in accordance with said display configuration data.

12. The vending machine according to Claim 9, further comprising second writing means for writing into said storage means said plurality of sets of component data received by said communication means at prescribed intervals, wherein said data creating means has means for creating data in which said plurality of sets of component data written into said storage means are combined in accordance with said display configuration data.

13. The vending machine according to Claim 9, wherein:
the data stored in said second storage means are said display configuration data created by a terminal connected to said server via a network and written into said second storage means together with said IC chip identifying data read by IC chip reading means of said terminal; and
said data creating means creates data in which said plurality of sets of component data are combined in accordance with the display configuration data received by said communication means.

14. The vending machine according to Claim 9, wherein:
the IC chip information read by said reading means contains other data than display configuration data, and
said data creating means has means for creating data in which said plurality of sets of component data are combined in accordance with the IC chip information.

15. The vending machine according to Claim 9, wherein said reading means is provided with at least one of a non-contact type IC chip reader and a contact type IC chip reader.

16. The vending machine according to Claim 9, wherein said plurality of sets of component data contain at least any one of still pictures, moving pictures and characters.

17. The vending machine according to Claim 9, wherein:
said plurality of sets of component data contain audio, and
audio output means for outputting audio in accordance with data created by said data creating means is provided.
